# EUROPEAN PATENT APPLICATION

(11) **EP 4 311 748 A1**
(43) Date of publication of application: **31.01.2024**
(21) Application number: 23181371.8
(22) Date of filing: 26.06.2023
(51) Int. Cl.: B62D 61/10, B62D 63/02, B25J 5/00

(54) **TRAVELING BODY**

(30) Priority: 27.07.2022 JP 2022119896
(71) Applicant: OMRON Corporation, Kyoto 600-8530 (JP)
(72) Inventor: MORI, Shotaro, Tokyo 113-0033 (JP); TANAKA, Kazutoshi, Tokyo 113-0033 (JP)
(74) Representative: SONN Patentanwälte GmbH & Co KG

(57) **Abstract**

A table tennis robot (traveling body) includes a chassis and at least three drive modules, each of which includes an omni wheel driven by a respective motor and each of which is installed at the chassis, and includes an installation space provided at a central portion of the chassis and configured to be installed with an auxiliary device.

## Description

### BACKGROUND

### Field of the Invention

The present disclosure relates to a traveling body.

### Description of the Related Art

A traveling body disclosed in Japanese Patent Application Laid-Open (JP-A) No. 2015-182588 includes plural omni wheels (vehicle wheels) and vehicle wheel motors disposed at six locations around a peripheral direction of a chassis.

### SUMMARY OF INVENTION

In the above related example a space surrounded by the vehicle wheel motors is present at a central portion of the traveling body. However, a hole corresponding to this space is formed at the central portion of the chassis, and there is no consideration given to installing some sort of auxiliary device in this space. Moreover, due to simply providing such a space, the drive mechanism is conceivably larger by an amount commensurate with this space.

The present disclosure enables an auxiliary component to be disposed in a central portion of a chassis while suppressing a traveling body employing omni wheels from becoming larger.

A traveling body according to a first aspect includes a chassis, at least three drive modules, that each of which includes an omni wheel driven by a respective motor and each of which is installed at the chassis, and includes an installation space that is provided at a central portion of the chassis in the same plane as the drive modules, and that is configured to be installed with an auxiliary device.

The traveling body is able to travel using the three drive modules installed at the chassis. The installation space is provided at the central portion of the chassis and enables an auxiliary device to be installed in the same plane as the drive modules, thereby enabling an auxiliary component to be disposed at the central portion of the chassis without securing a separate installation space. This thereby enables the traveling body to be suppressed from becoming larger. The auxiliary component may, for example, be a driven wheel and a rotary encoder, a battery, a microcomputer, a circuit, or a drive mechanism of an actuator.

A second aspect is the traveling body according to the first aspect, wherein two driven wheels arranged such that their rotation axes are orthogonal to each other and two rotary encoders that respectively detect rotation of the driven wheels are provided in the installation space as the auxiliary device.

Due to the omni wheels being liable to slip, sometimes an error arises between movement of the traveling body as predicted from the rotation of the motors and actual movement of the traveling body. In this traveling body, a driven wheel and an rotary encoder are provided as an auxiliary device in the installation space at the central portion of the chassis, and so this enables movement of the traveling body to be controlled more accurately by detection and feedback of the actual movement of the traveling body.

A third aspect is the traveling body according to the first aspect, wherein a movable shaft that rotates about a horizontal axis is provided in an upper portion of the chassis, and an end effector is mounted at the movable shaft.

Such a traveling body is able to travel and perform some kind of task using the end effector. Various roles can be given to the end effector.

A fourth aspect is the traveling body according to the first aspect, wherein a shaft of the omni wheel and a shaft of the respective motor are disposed parallel to each other in each of the drive modules, and each drive module includes the respective motor, a first pulley provided at the shaft of the omni wheel, a second pulley provided at the shaft of the respective motor, and a transmission body that transmits rotation between the first pulley and the second pulley.

In this traveling body a structure is adopted in which rotation of the respective motor is transmitted to an omni wheel by the first pulley, the second pulley, and the transmission body, thereby enabling an installation space to be secured at the central portion of the chassis more easily than cases in which the respective motor is disposed directly on the shaft of the omni wheel.

The present disclosure enables an auxiliary component to be disposed at a central portion of a chassis while suppressing a traveling body employing an omni wheel from becoming larger.

### BRIEF DESCRIPTION OF DRAWINGS

Exemplary embodiments of the present disclosure will be described in detail based on the following figures, wherein:
Fig. 1 is a perspective view of a table tennis robot according to the present exemplary embodiment, illustrated in a state in which a racket has been tilted to central portion side of a chassis;
Fig. 2 is a perspective view of a table tennis robot according to the present exemplary embodiment, illustrated in a state in which a racket has been raised;
Fig. 3 is a plan view schematically illustrating a table tennis robot according to the present exemplary embodiment, illustrated in a state in which a racket has been raised;
Fig. 4 is a plan view illustrating a layout of drive modules, driven wheels, and rotary encoders in a table tennis robot according to the present exemplary embodiment;
Fig. 5 is a bottom view illustrating a table tennis robot according to the present exemplary embodiment;
Fig. 6 is a block diagram illustrating a system configuration of a table tennis robot according to the present exemplary embodiment;
Fig. 7 is a perspective view schematically illustrating an elevator operating robot according to a Modified Example 1;
Fig. 8 is a perspective view schematically illustrating a cleaning robot according to a Modified Example 2;
Fig. 9 is a perspective view schematically illustrating a payload suspending robot of a Modified Example 3;
Fig. 10 is a perspective view schematically illustrating a door opening and closing robot according to a Modified Example 4; and
Fig. 11 is a perspective view schematically illustrating an elevated-imaging robot according to a Modified Example 5.

### DESCRIPTION OF EMBODIMENTS

Description follows regarding an embodiment to implement the present disclosure, with reference to the drawings. Configuration elements indicated using the same reference numerals in the drawings are the same or similar configuration elements. Note that sometimes description is omitted for duplicate reference numerals in the exemplary embodiment described below. Moreover, the drawings employed in the following description are all merely schematic, and the dimensional relationships of each element and the proportions and the like of each element illustrated in a drawing do not necessary match actual dimension relationships, proportions, and the like. The dimensional relationships of each element and the proportions and the like of each element between plural drawings also do not necessary match actual dimension relationships, proportions, and the like.

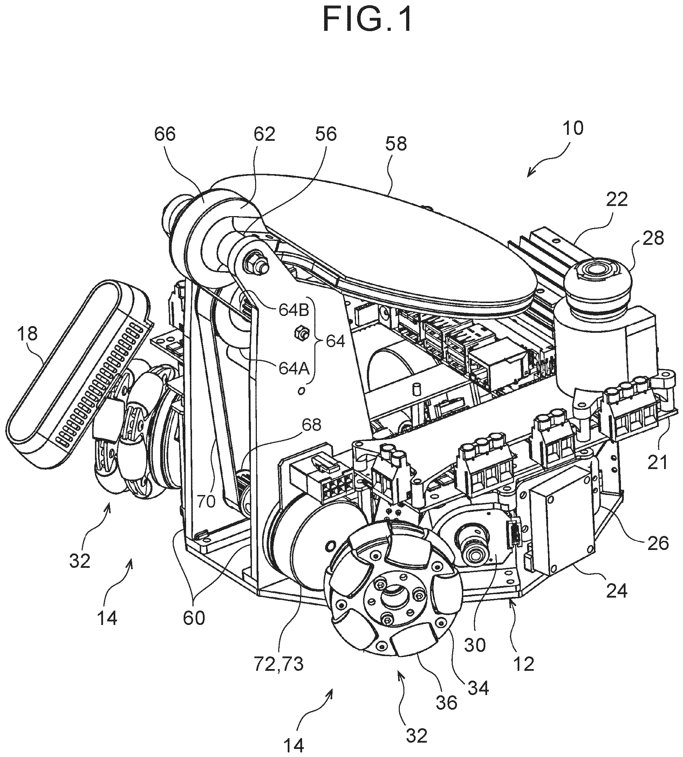

A traveling body according to the present exemplary embodiment in Fig. 1 to Fig. 5 is, for example, a self-propelled table tennis robot 10. The table tennis robot 10 includes a chassis 12, three, for example, drive modules 14, and an installation space 16.

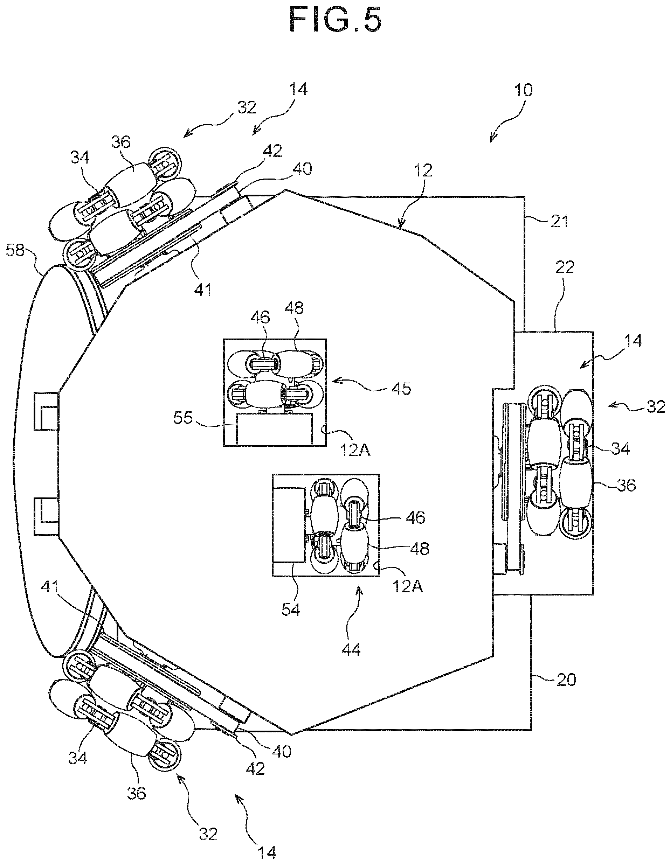

The chassis 12 is a base member to which various components of the table tennis robot 10 are attached. The chassis 12 is formed in a shape appropriate for installation of the various components and is, for example, a plate shaped member. The shape of the chassis 12 may be a circular plate or near circular plate shape, or may be a polygon shape. Furthermore, the shape of the chassis 12 may be a shape combining a circular arc and straight lines. As illustrated in Fig. 5, a bottom face of the chassis 12 configures, for example, a bottom face of the table tennis robot 10. Two, for example, rectangular openings 12A are formed in a central portion of the chassis 12.

Other than the various components described later, the chassis 12 also includes, for example, a stereo camera 18 for detecting a table tennis ball (omitted in the drawings), two DC motor controllers 20, 21, a microcomputer 22, a CAN communication board 24, a battery case 26, and an emergency stop switch 28. The stereo camera 18 also includes, for example, a girosensor.

There are at least three of the drive modules 14 installed at the chassis 12. Each drive modules 14 include omni wheels 32 driven by respective motors 30. The motors 30 are, for example, DC motors, and are controlled by the microcomputer 22 and DC motor controllers 20, 21. The motors 30 are each provided with a rotary encoder 31. The omni wheels 32 are each configured by plural rollers 36 provided at an outer periphery of a vehicle wheel 34, with the rollers 36 rotating about tangential line directions with respect to the circumferential direction of the vehicle wheel 34 and provided around the circumferential direction thereof. The omni wheels 32 rotate when driven by the motors 30. The rollers 36 that are in contact with the ground perform following rotation when a lateral force is acting on the omni wheels 32, allowing the table tennis robot 10 to move in a direction of the lateral force.

For each single drive module 14 there are, for example, two omni wheels 32 disposed so as to overlap with each other in an axial direction. In the two omni wheels 32, the rollers 36 are provided around the circumferential direction of each of the two vehicle wheels 34 in a layout staggered from each other. The two omni wheels 32 are rotationally supported by a shaft bearing 38 and driven by the motor 30 so as to be integrally rotated. The omni wheels 32 are provided further to the outside than an outer periphery of the chassis 12, and are provided in a state jutting out below the bottom face of the chassis 12. Adopting such an approach prevents interference between the omni wheels 32 and the chassis 12. The chassis 12 is configured such that the table tennis robot 10 travels on a floor (omitted in the drawings) in a state separated from the floor, such that interference between the chassis 12 and the floor is prevented.

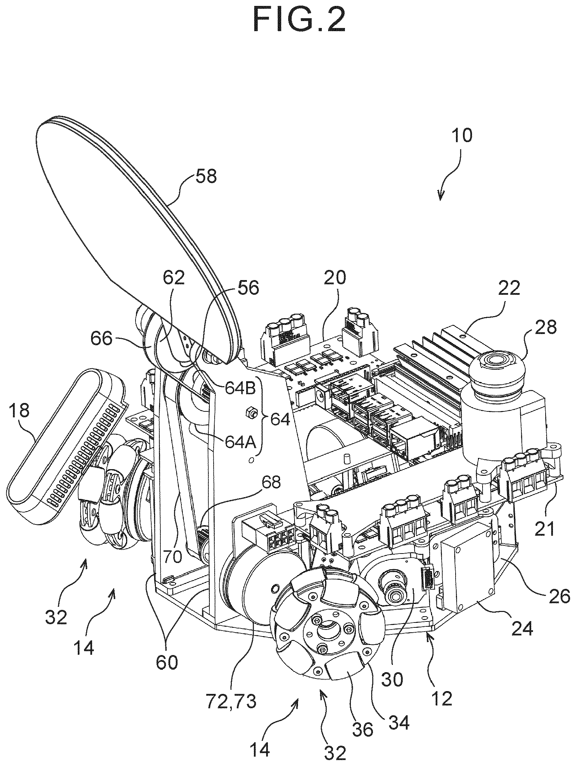

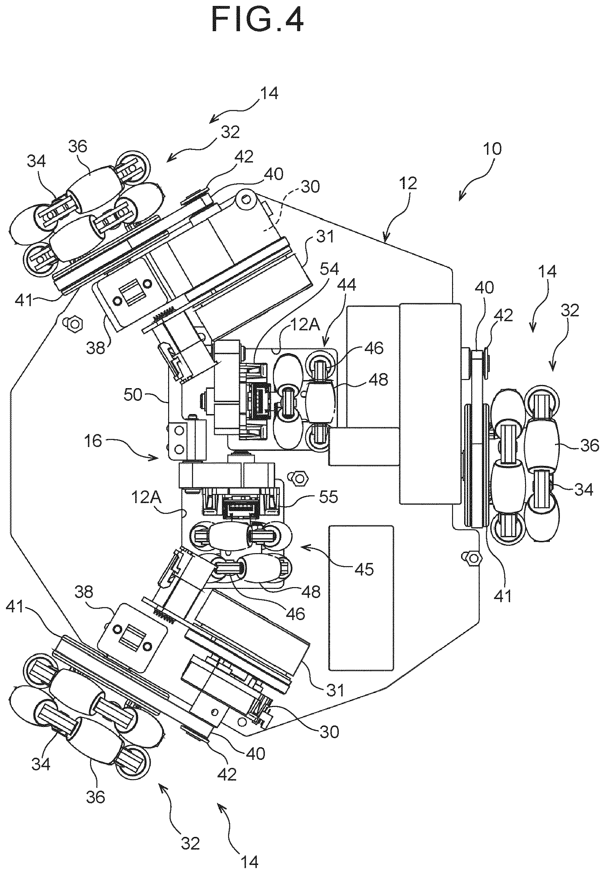

As illustrated in Fig. 4, in each of the drive modules 14, the shaft of the omni wheels 32 and the shaft of the respective motor 30 are disposed so as to be parallel to each other. Each of the drive modules 14 includes, for example, the respective motor 30, a first pulley 41 provided on the shaft of the omni wheels 32, a second pulley 42 provided on the shaft of the respective motor 30, and a belt 40 serving as an example of a transmission body to transmit rotation between the first pulley 41 and the second pulley 42. The belt 40 is entrained around the first pulley 41 and the second pulley 42. Thus, for example, the motor 30 and the shaft bearing 38 are arranged in a state alongside each other. Note that illustration of the second pulley 42 and the belt 40 is omitted in Fig. 1 and Fig. 2.

The installation space 16 is provided at a central portion of the chassis 12 in the same plane as the drive modules 14, and is configured so as to enable installation of an auxiliary device. In the present exemplary embodiment, the two driven wheels 44, 45 disposed so as to have rotation axes orthogonal to each other, and two rotary encoders 54, 55 to detect rotation of the respective driven wheels 44, 45, are provided as an auxiliary device in the installation space 16. The driven wheels 44, 45 are configured by omni wheels including rollers 48 provided at vehicle wheels 46. The driven wheels 44, 45 and the rotary encoders 54, 55 are, for example, attached to the chassis 12 by a bracket 50. The driven wheels 44, 45 jut out below the chassis 12 through the two openings 12A in the chassis 12 (Fig. 5). The amount by which the driven wheels 44, 45 jut out downward from the openings 12A of the chassis 12 is, for example, an equivalent amount to the amount by which the omni wheels 32 jut out from the chassis 12. Adopting such an approach means that both the omni wheels 32 and the driven wheels 44, 45 contact the floor at the same time, and when the table tennis robot 10 is traveling the driven wheels 44, 45 perform following rotation due to friction with the floor.

In Fig. 1 and Fig. 2, a movable shaft 56 for rotating about a horizontal axis is provided at an upper portion of the chassis 12. A racket 58 is mounted at the movable shaft 56 as an example of an end effector. More specifically, for example, a pair of leg portions 60 are provided upstanding from the chassis 12. Two ends of the movable shaft 56 are, for example, rotatably supported at upper end portions of the pair of leg portions 60 with a rotation axis along a horizontal direction. A pulley 62 is provided at the movable shaft 56. A pulley 64 resulting from integrating a large pulley 64A and a small pulley 64B together is provided between the pair of leg portions 60 and below the movable shaft 56. The small pulley 64B has a smaller diameter than the pulley 62 of the movable shaft 56. A belt 66 serving as a transmission body is entrained around the pulley 62 and the small pulley 64B. A pulley 68 having a smaller diameter than the pulley 64 is provided between the pair of leg portions 60 and below the pulley 64. A belt 70 serving as a transmission body is entrained around the pulleys 64, 68.

The pulley 68 is attached to a rotation shaft of a motor 72. The motor 72 is, for example, attached to one of the leg portions 60. A rotary encoder 73 is provided at the motor 72. Rotation of the motor 72 is reduced in speed by the pulley 68 and the large pulley 64A, and is further reduced in speed by the small pulley 64B and the pulley 62 of the movable shaft 56, so as to swing the racket 58. The motor 72 is, for example, controlled by the microcomputer 22 and the DC motor controller 21.

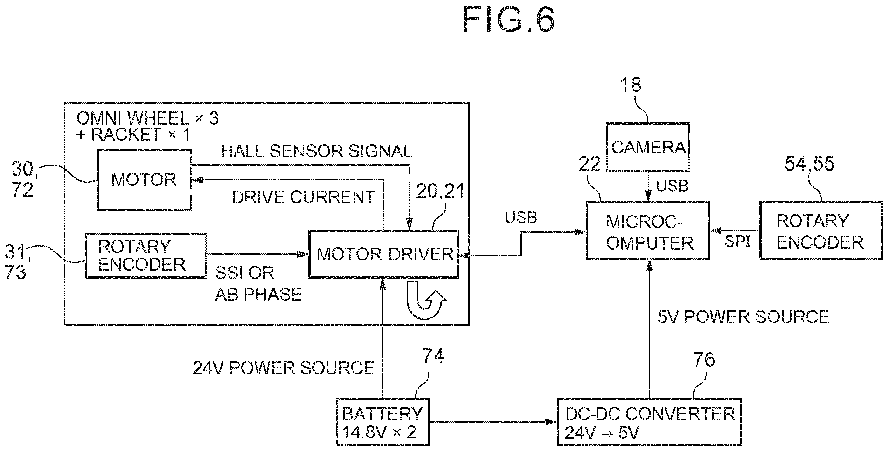

Fig. 6 illustrates an example of a system configuration of the table tennis robot 10. A video from the stereo camera 18 is input to the microcomputer 22 though a universal serial bus (USB). Signals from the rotary encoders 54, 55 are also input to the microcomputer 22 through an SPI interface.

Signals are also exchanged through a USB between the microcomputer 22 and a motor driver in the DC motor controllers 20, 21.

Drive currents are supplied from the motor driver to the motors 30, 72, and Hall sensor signals are input to the motor driver from the motors 30, 72. A-phase B-phase signals are also input from rotary encoders 31, 73 through a synchronized serial interface (SSI). Motor drivers corresponding to each motor are connected to each other in a daisy chain over a controller area network (CAN). As a power source, for example, 24V power is supplied to the motor drivers from 2 × 14.8V batteries 74. This 24V power is converted to 5V by a DC-DC converter 76, and supplied to the microcomputer 22.

### Operation and Advantageous Effects

Description follows regarding operation and advantageous effects of the present exemplary embodiment configured as described above. In Fig. 4, the table tennis robot 10 according to the present exemplary embodiment is able to travel using the three drive modules 14 installed at the chassis 12.

The installation space 16 enabling installation of an auxiliary device is provided at the central portion of the chassis 12, and so auxiliary components can be disposed in the central portion of the chassis 12 without securing a separate installation space 16. This thereby enables the table tennis robot 10 to be suppressed from becoming larger. Each of the drive modules 14 is configured with a structure in which rotation of the respective motor 30 is transmitted to the omni wheels 32 by the first pulleys 41, 42 and the belt 40, enabling the installation space 16 at the central portion of the chassis 12 to be secured more easily than cases in which the respective motor 30 is disposed directly on the shaft of the omni wheels 32. This thereby enables the driven wheels 44, 45 and the rotary encoders 54, 55, serving as examples of auxiliary components, to be disposed at the central portion of the chassis 12 while also suppressing the table tennis robot 10 employing the omni wheels 32 from becoming larger.

Due to the omni wheels 32 being liable to slip, sometimes an error arises between movement of the table tennis robot 10 as predicted from the rotation of each of the motors 30 and actual movement of the table tennis robot 10. In the present exemplary embodiment, the driven wheels 44, 45 and the rotary encoders 54, 55 are provided as an auxiliary device in the installation space 16 at the central portion of the chassis 12. The shafts of the driven wheels 44, 45 are orthogonal to each other, and so this enables respective detection of actual movement of the table tennis robot 10 in, for example, an X direction and a Y direction (omitted in the drawings). Detection and feedback of this actual movement to the microcomputer 22 enables movement of the table tennis robot 10 to be more accurately controlled.

Moreover, in the present exemplary embodiment, in addition to such travel, a table tennis ball on a table can also be returned by the racket 58 serving as an end effector. More specifically, the microcomputer 22 computes a return direction from a position and arrival direction of a ball as detected by the stereo camera 18, controls a position and orientation of the table tennis robot 10, and also controls movement of the racket 58. This enables, for example, a table tennis rally to be performed with a person.

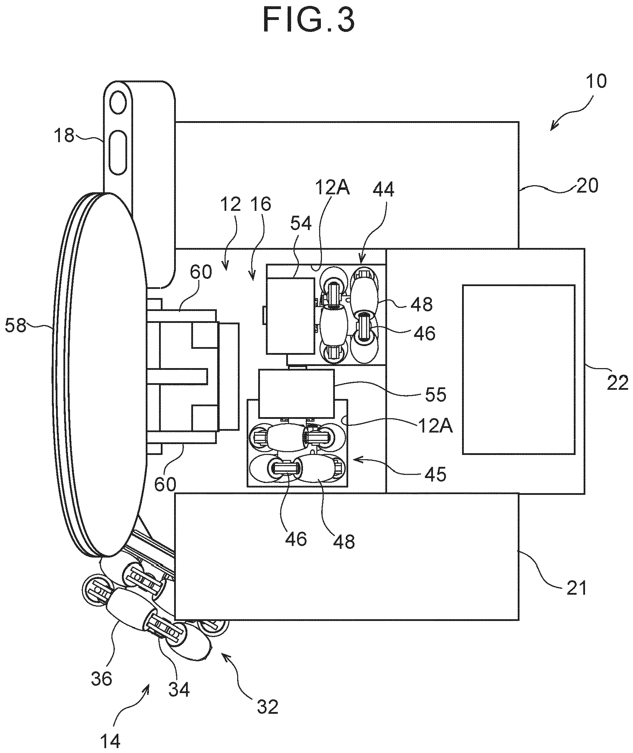

More specifically, in Fig. 6 the microcomputer 22 transmits a signal to the DC motor controllers 20, 21, drives the omni wheels 32, and also gives a swing command to the racket 58. When this occurs, the microcomputer 22 acquires a number of rotations, a rotation speed, and a current value for each motor. The microcomputer 22 also predicts its own position using a signal from the stereo camera 18, calculates a movement speed of the table tennis robot 10 from a movement command position, and calculates a rotation speed of the omni wheels 32 from this movement speed. Furthermore, the microcomputer 22 acquires a number of rotations and a rotation speed of the driven wheels 44, 45 (from Fig. 3 to Fig. 5) from the rotary encoders 54, 55, and predicts an actual position of the table tennis robot 10. This thereby enables movement of the table tennis robot 10 to be controlled more accurately.

### Modified Examples

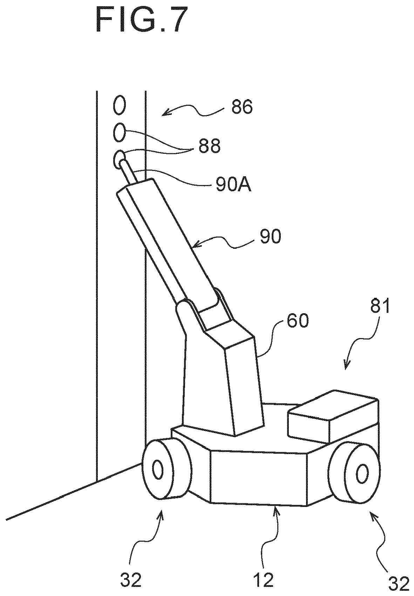

Various roles other than table tennis can be imparted to the end effector. A traveling body 81 illustrated in Fig. 7 is an elevator operating robot. The traveling body 81 includes an arm 90 that serves as an example of an end effector and swings about a horizontal axis, with a projection portion 90A corresponding to a size of buttons 88 of an elevator 86 provided at a distal end of the arm 90. The arm 90 may be a telescopic arm. The traveling body 81 pushes a freely selected button 88 of the elevator 86 using the projection portion 90A by combining travel with swinging of the arm 90, enabling the elevator 86 to be operated.

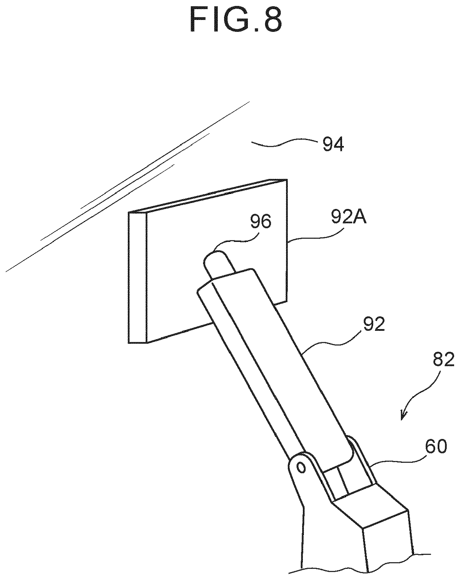

A traveling body 82 illustrated in Fig. 8 is a window cleaning robot. The traveling body 82 includes an arm 92 that serves as an end effector, swings about a horizontal axis, and includes a wiper portion 92A provided at a distal end of the arm 92 for wiping a window 94. The arm 92 may be a telescopic arm. The wiper portion 92A is, for example, attached to the arm 92 through a universal joint 96. This traveling body 82 is able to wipe the window 94 by combining travel with swinging of the arm 92.

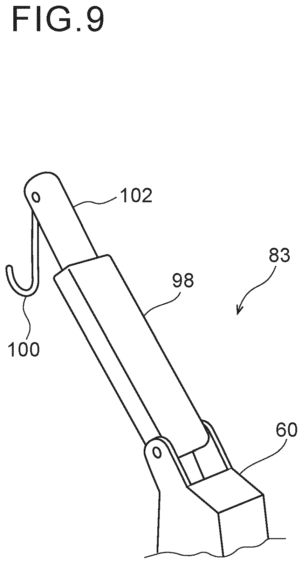

A traveling body 83 illustrated in Fig. 9 is a suspending robot. The traveling body 83 includes an arm 98 that serves as an end effector, swings about a horizontal axis, and includes a hook 100 provided at a distal end portion 102 of the arm 98 for suspending a payload (omitted in the drawings). The arm 98 may be a telescopic arm. The traveling body 83 is able to suspend a payload from the hook 100 and move the payload in a freely selected direction by combining travel with swinging of the arm 98.

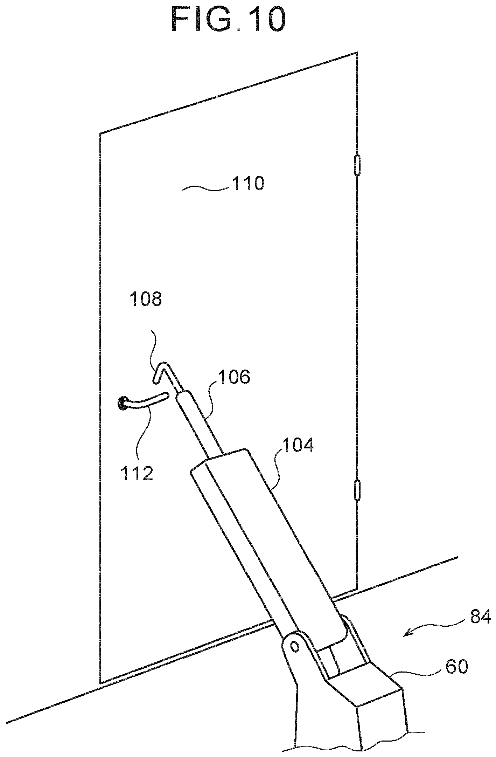

A traveling body 84 illustrated in Fig. 10 is a door opening and closing robot. This traveling body 84 includes an arm 104 that serves as an end effector, swings about a horizontal axis, and includes a hook 108 provided at a distal end portion 106 of the arm 104 capable of engaging with an open-close lever 112 of a door 110 from above. The arm 104 may be a telescopic arm. This traveling body 84 is able to operate the open-close lever 112 of the door 110 using the hook 108 and to open or close the door 110 by combining travel with swinging of the arm 104.

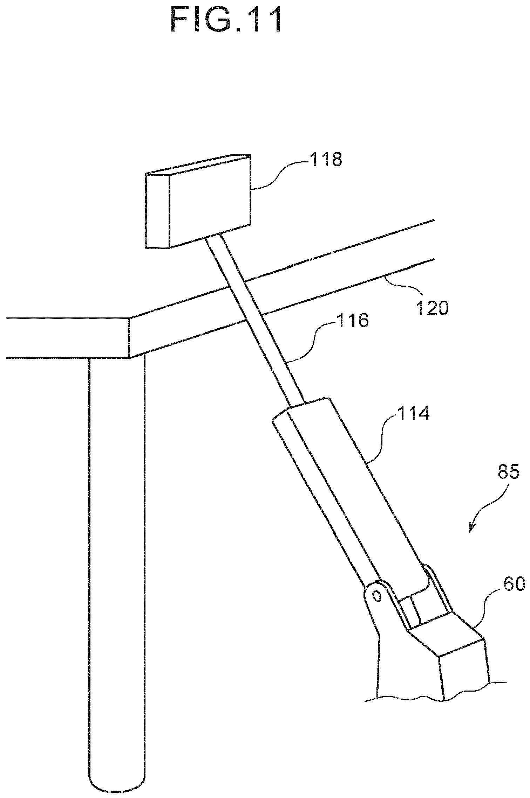

A traveling body 85 illustrated in Fig. 11 is an imaging robot. The traveling body 85 includes an arm 114 that serves as an end effector, swings about a horizontal axis, and includes a camera 118 provided at a distal end portion 116 of the arm 114. The arm 114 may be a telescopic arm. The traveling body 85 is able to image, for example, an upper side of a table 120 from a freely selected direction using the camera 118 by combining travel with swinging of the arm 114.

### Other Exemplary Embodiments

Although examples of an exemplary embodiment of the present disclosure have been described above, exemplary embodiments of the present disclosure are not limited to those described above, and obviously various other embodiments may be implemented within a range not departing from the spirit of the present disclosure.

Although the driven wheels 44, 45 and the rotary encoders 54, 55 were given as an example of an auxiliary device provided in the installation space 16 of the chassis 12, the auxiliary device is not limited thereto and, for example, may include various sensors, a motor 30, a computer, or the like.

Although the table tennis robot 10, and the traveling bodies 81, 82, 83, 84, 85 each included an end effector, the type of end effector is not limited to these. Moreover, a configuration without an end effector may be adopted.

The drive modules 14 each included the motor 30, the first pulley 41, the second pulley 42, and the belt 40, however the configuration of the drive modules is not limited thereto, and may be any configuration capable of driving the omni wheels 32 and capable of securing the installation space 16 at the central portion of the chassis 12. Moreover, although the belt 40 was given as an example of a transmission body, the transmission body may be a chain, roller, or the like.

Although the stereo camera 18 was employed to detect a table tennis ball, there is no limitation thereto, and, for example, a color distance sensor may be employed.

## Claims

1. A traveling body (10, 81, 82, 83, 84, 85) comprising:
a chassis (12);
at least three drive modules (14), each of which includes an omni wheel (32) driven by a respective motor (30) and each of which is installed at the chassis (12); and
an installation space (16) that is provided at a central portion of the chassis (12) in the same plane as the drive modules (14), and that is configured to be installed with an auxiliary device.

2. The traveling body (10, 81, 82, 83, 84, 85) of claim 1, wherein:
two driven wheels (44,45) arranged such that their rotation axes are orthogonal to each other, and two rotary encoders (54, 55) that respectively detect rotation of the driven wheels (44 ,45), are provided in the installation space (16) as the auxiliary device.

3. The traveling body (10, 81, 82, 83, 84, 85) of claim 1, wherein:
a movable shaft (56) that rotates about a horizontal axis is provided in an upper portion of the chassis (12); and
an end effector (58) is mounted at the movable shaft (56).

4. The traveling body (10, 81, 82, 83, 84, 85) of claim 2, wherein;
a movable shaft (56) that rotates about a horizontal axis is provided in an upper portion of the chassis (12); and
an end effector (58) is mounted at the movable shaft (56).

5. The traveling body (10, 81, 82, 83, 84, 85) of claim 1, wherein:
a shaft of the omni wheel (32) and a shaft of the respective motor (30) are disposed parallel to each other in each of the drive modules (14); and
each drive module (14) includes the respective motor (30), a first pulley (41) provided at the shaft of the omni wheel (32), a second pulley (42) provided at the shaft of the respective motor (30), and a transmission body (40) that transmits rotation between the first pulley (41) and the second pulley (42).

6. The traveling body (10, 81, 82, 83, 84, 85) of claim 2, wherein:
a shaft of the omni wheel (32) and a shaft of the respective motor (30) are disposed parallel to each other in each of the drive modules (14); and
each drive module (14) includes the respective motor (30), a first pulley (41) provided at the shaft of the omni wheel (32), a second pulley (42) provided at the shaft of the respective motor (30), and a transmission body (40) that transmits rotation between the first pulley (41) and the second pulley (42).

7. The traveling body (10, 81, 82, 83, 84, 85) of claim 3, wherein:
a shaft of the omni wheel (32) and a shaft of the respective motor (30) are disposed parallel to each other in each of the drive modules (14); and
each drive module (14) includes the respective motor (30), a first pulley (41) provided at the shaft of the omni wheel (32), a second pulley (42) provided at the shaft of the respective motor (30), and a transmission body (40) that transmits rotation between the first pulley (41) and the second pulley (42).

8. The traveling body (10, 81, 82, 83, 84, 85) of claim 4, wherein:
a shaft of the omni wheel (32) and a shaft of the respective motor (30) are disposed parallel to each other in each of the drive modules (14); and
each drive module (14) includes the respective motor (30), a first pulley (41) provided at the shaft of the omni wheel (32), a second pulley (42) provided at the shaft of the respective motor (30), and a transmission body (40) that transmits rotation between the first pulley (41) and the second pulley (42).
